# EUROPEAN PATENT APPLICATION

(11) **EP 3 683 877 A1**
(43) Date of publication of application: **22.07.2020**
(21) Application number: 18856849.7
(22) Date of filing: 13.08.2018
(51) Int. Cl.: H01M 10/04, H01M 2/10, H01M 2/14, H01M 2/16, H01M 10/0585

(54) **STACKED BATTERY, AND BATTERY MODULE**

(30) Priority: 14.09.2017 JP 2017177128
(71) Applicant: Envision AESC Japan Ltd., Kanagawa 2520012 (JP)
(72) Inventor: ONO, Masato, Atsugi-shi Kanagawa 243-0123 (JP); ATOBE, Keigo, Atsugi-shi Kanagawa 243-0123 (JP); SESHITA, Hatsuna, Atsugi-shi Kanagawa 243-0123 (JP); ISHIMOTO, Seiji, Atsugi-shi Kanagawa 243-0123 (JP); KIMURA, Aika, Zama-shi Kanagawa 252-0012 (JP)
(74) Representative: Santarelli
(86) International application number: PCT/JP2018/030217
(87) International publication number: WO 2019/054114

(57) **Abstract**

[Problem]

Provided are a stacked battery capable of improving a volume energy density while maintaining impact resistance, and a battery module includes a stacked battery.

[Solution]

The stacked battery 100 includes a power generation element 40 in which a plurality of electrodes 10, 20 and a plurality of separators 30 are alternately stacked, an exterior member 50 configured to accommodate the power generation element, first bonding portions 61 configured to bond the electrodes and the separators, and second bonding portions 62 configured to bond outermost layers 40a of the power generation element and an inner side 50a of the exterior member. The exterior member includes a joint portion 52 where peripheral edge portions 51 of the exterior member are overlapped and joined. When the power generation element is viewed in a plan view from a stacking direction in which the electrodes and the separators are stacked, an outer peripheral edge 30a of each of the separators has a shape similar to that of an outer peripheral edge 10a, 20a of each of the electrodes, and the separators have such a size that the outer peripheral edge of each of the separators is located inside the joint portion without being sandwiched by the joint portion.

## Description

### TECHNICAL FIELD

The present disclosure relates to a stacked battery and a battery module.

### BACKGROUND

A stacked battery includes a power generation element in which a plurality of electrodes and a plurality of separators are alternately stacked, an exterior member that accommodates the power generation element, and positive and negative tabs electrically connected to the power generation element and led out of the exterior member. The exterior member seals the power generation element as peripheral edge portions thereof are overlapped and bonded.

There is known a stacked battery in which a part of an outer peripheral edge of each of the separators protrudes laterally beyond an outer peripheral edge of each of the electrodes when a power generation element is viewed in a plan view from a stacking direction in which the electrodes and the separators are stacked (*see* Patent Document 1). In this stacked battery, a portion of the outer peripheral edge of each of the separators that protrudes laterally beyond the outer peripheral edge of each of the electrodes is joined to an exterior member. With this configuration, a position of the power generation element is prevented from being shifted with respect to the exterior member when the stacked battery is subjected to an impact.

### [Prior Art Document]

### Patent Document

Patent Document 1: Japanese laid-open publication No. 2013-73913

However, in the exterior member, a space for joining the outer peripheral edge of each of the separators and the exterior member exists in addition to a space for accommodating the power generation element. For this reason, a volume energy density representing an output energy per unit volume of the stacked battery decreases.

The present disclosure provides some embodiments of a stacked battery capable of improving a volume energy density while maintaining impact resistance, and a battery module including such a stacked battery.

### SUMMARY

According to one embodiment of the present disclosure, there is provided a stacked battery including: a power generation element in which a plurality of electrodes and a plurality of separators are alternately stacked; an exterior member configured to accommodate the power generation element; first bonding portions configured to bond the electrodes and the separators; and second bonding portions configured to bond outermost layers of the power generation element and an inner side of the exterior member. The exterior member includes a joint portion where peripheral edge portions of the exterior member are overlapped and joined. When the power generation element is viewed in a plan view from a stacking direction in which the electrodes and the separators are stacked, an outer peripheral edge of each of the separators has a shape similar to a shape of an outer peripheral edge of each of the electrodes, and the separators have such a size that the outer peripheral edge of each of the separators is located inside the joint portion without being sandwiched by the joint portion.

According to another embodiment of the present disclosure, there is provided a battery module including at least one of the stacked battery mentioned above, including: a holding member configured to sandwich and hold the stacked battery from both sides in the stacking direction; a pressing part configured to apply a pressing force to the stacked battery in the stacking direction; and third bonding portions configured to bond the stacked battery to the holding member. When the stacked battery is viewed in a plan view from the stacking direction, the second bonding portions bond the outermost layers of the power generation element and the inner side of the exterior member in a region that does not overlap with a region where the pressing part and the third bonding portions are present.

### BRIEF DESCRIPTION OF DRAWINGS

FIG. 1 is a perspective view showing a battery module.
FIG. 2 is a schematic sectional view showing the battery module.
FIG. 3 is a perspective view showing a stacked battery.
FIG. 4 is a sectional view taken along line 4-4 in FIG. 3.
FIG. 5 is an enlarged sectional view showing a main part of a power generation element.
FIG. 6 is a plan view showing the stacked battery in a state in which a part of an outer layer member is cut away.
FIG. 7 is a plan view showing Modification 1 of an arrangement position of a second bonding portion.
FIG. 8 is a plan view showing Modification 2 of the arrangement position of the second bonding portion.
FIG. 9 is a plan view showing Modification 3 of the arrangement position of the second bonding portion.
FIG. 10 is an enlarged sectional view showing a main part of the power generation element, and corresponds to FIG. 5.

### DETAILED DESCRIPTION

Embodiments and modifications thereof will be described below with reference to the accompanying drawings. In the description of the drawings, the same elements are denoted by like reference numerals, and the redundant description thereof is omitted. The size and ratio of each member in the drawings may be exaggerated for the convenience of explanation and may be different from the actual size and ratio.

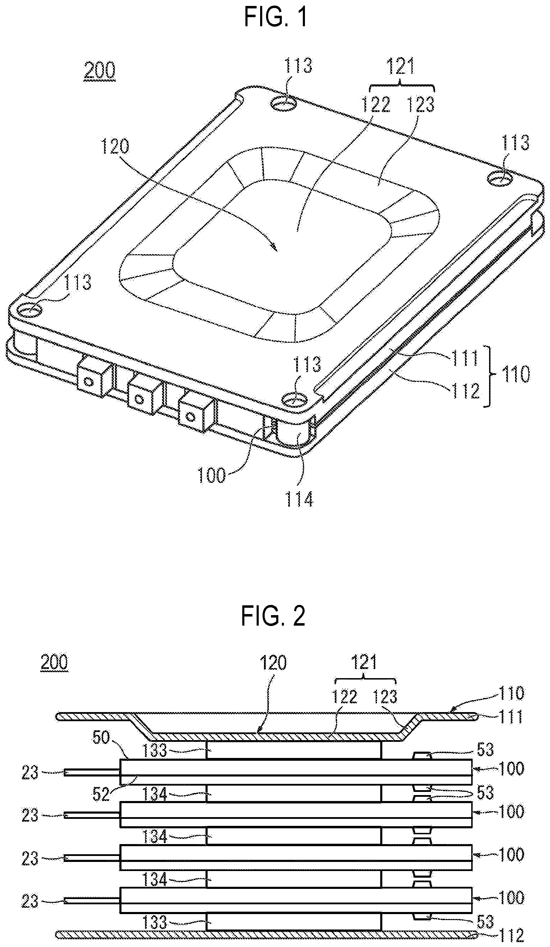

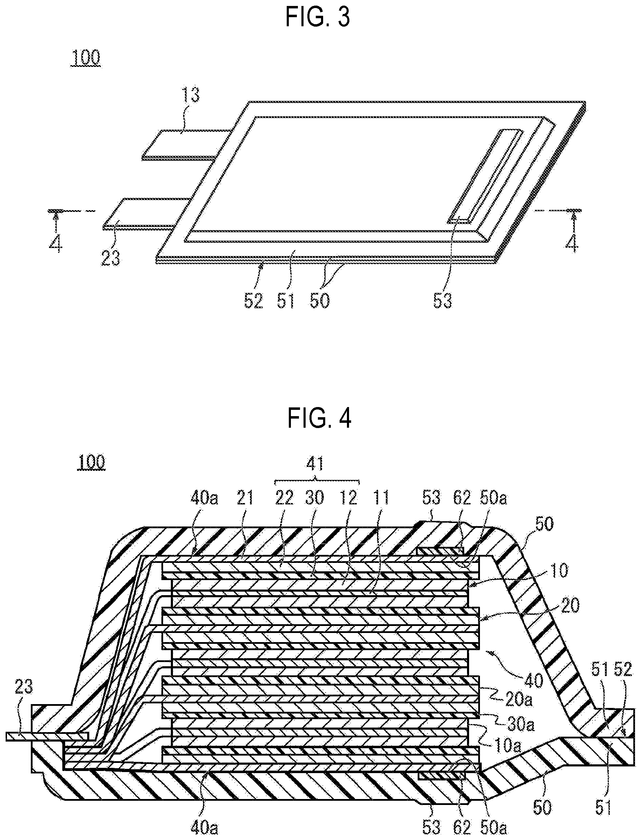

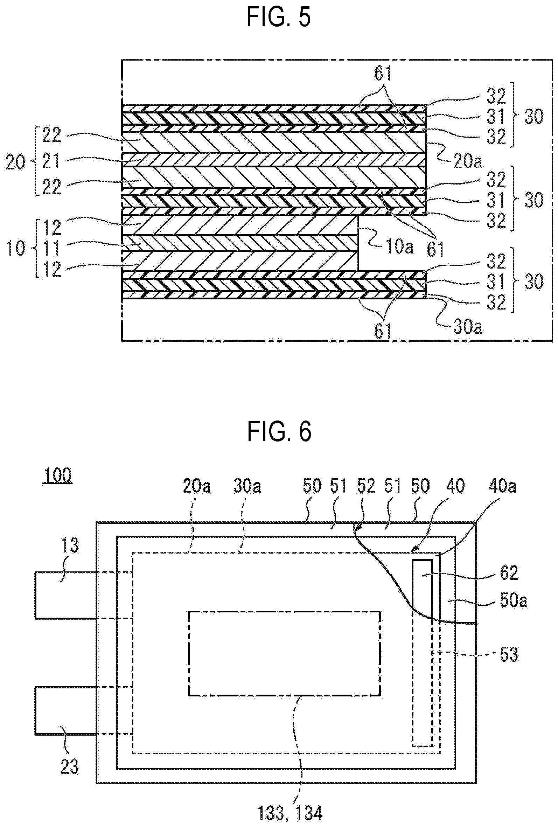

FIG. 1 is a perspective view showing a battery module 200. FIG. 2 is a schematic sectional view showing the battery module 200. FIG. 3 is a perspective view showing a stacked battery 100. FIG. 4 is a sectional view taken along line 4-4 in FIG. 3. FIG. 5 is an enlarged sectional view showing the main part of FIG. 4. FIG. 6 is a plan view showing the stacked battery 100 in a state in which a part of an outer layer member is cut away. In the following description, the term "stacking direction" refers to a direction in which electrodes and separators are stacked in the stacked battery 100. The stacked battery 100 of the present embodiment has a flat shape. The direction in which a plurality of stacked batteries 100 is stacked coincides with the stacking direction in which the electrodes and the separators are stacked.

Referring to FIGS. 1 and 2, the illustrated battery module 200 includes a plurality of stacked batteries 100 and a holding member 110 that sandwiches and holds the stacked batteries 100 from both sides in the stacking direction.

### (Stacked Battery 100)

First, the stacked battery 100 will be described. Referring to FIGS. 3 to 6, in general, the stacked battery 100 includes a power generation element 40 in which a plurality of electrodes 10 and 20 and a plurality of separators 30 are alternately stacked, and an exterior member 50 that accommodates the power generation element 40 (*see* FIGS. 3 and 4). The stacked battery 100 includes first bonding portions 61 for bonding the electrodes 10 and 20 and the separators 30 (*see* FIG. 5). The stacked battery 100 includes second bonding portions 62 for bonding outermost layers 40a of the power generation element 40 and an inner side 50a of the exterior member 50 (*see* FIGS. 4 and 6). The exterior member 50 includes a joint portion 52 in which peripheral edge portions 51 are overlapped and joined (*see* FIGS. 4 and 6). When the power generation element 40 is viewed in a plan view from the stacking direction, each of the separators 30 includes an outer peripheral edge 30a having a shape similar to a shape of outer peripheral edges 10a and 20a of the electrodes 10 and 20, and has such a size that the outer peripheral edge 30a of each of the separators 30 is located inside the joint portion 52 without being sandwiched by the joint portion 52 (*see* FIG. 6). In the following description, the stacked battery 100 is also simply referred to as "unit cell 100." Details will be described below.

Referring to FIGS. 4 and 5, the power generation element 40 includes the positive electrode 10 in which a positive electrode active material layer 12 is disposed on at least one surface of a positive electrode current collector 11, the negative electrode 20 in which a negative electrode active material layer 22 is disposed on at least one surface of a negative electrode current collector 21, and a separator 30 for holding an electrolytic solution. A unit cell layer 41 is formed by causing the positive electrode active material layer 12 and the negative electrode active material layer 22 to face each other with the separator 30 interposed therebetween. The power generation element 40 is accommodated in the exterior member 50 in a state where a plurality of unit cell layers 41 is stacked.

The positive electrode current collector 11 has a shape of a thin film made of, for example, aluminum. A positive electrode tab 13 for charging and discharging is connected to the positive electrode current collector 11. The positive electrode active material layer 12 includes a positive electrode active material such as spinel type lithium manganite, lithium nickel manganese cobalt composite oxide having a layered crystal structure, or the like.

The negative electrode current collector 21 has a shape of a thin film made of, for example, copper. A negative electrode tab 23 for charging and discharging is connected to the negative electrode current collector 21. The negative electrode active material layer 22 includes negative electrode active materials. At least one of the negative electrode active materials is selected from the group consisting of graphite, amorphous carbon-coated graphite, silicon (Si), silicon alloy, and silicon oxide. An area of the negative electrode active material layer 22 is larger than an area of the positive electrode active material layer 12. Thus, even if positions of the positive electrode active material layer 12 and the negative electrode active material layer 22 are shifted relative to each other, a facing area between the positive electrode active material layer 12 and the negative electrode active material layer 22 can be kept constant. Therefore, it is possible to suppress a fluctuation in power generation capacity due to a change in the facing area between the positive electrode active material layer 12 and the negative electrode active material layer 22.

The separator 30 holds an electrolyte contained in the electrolytic solution. A type of the separator 30 is not particularly limited as long as it can hold the electrolyte contained in the electrolytic solution. A conventionally known separator may be appropriately used.

The exterior member 50 accommodates the power generation element 40 together with the electrolytic solution. The exterior member 50 is formed of a laminate sheet having a three-layer structure. A first innermost layer is formed using a heat-fusible resin, for example, polypropylene (PP), polyethylene (PE), ionomer, or ethylene vinyl acetate (EVA). A second layer is formed using a foil-like metal, for example, an Al foil or a Ni foil. A third layer is formed using a resinous film, for example, rigid polyethylene terephthalate (PET) or nylon.

The exterior member 50 has the joint portion 52 where the peripheral edge portions 51 are overlapped and joined. The joint portion 52 is formed by overlapping and heating the peripheral edge portions 51 of the exterior member 50 so that the first layers of heat-fusible resin are welded to each other.

Referring to FIG. 5, the first bonding portions 61 bond the electrodes 10 and 20 (the positive electrode 10 and the negative electrode 20) and the separators 30. Thus, when the unit cell 100 receives an impact, it is possible to prevent a positional shift called a playing card shift. As used herein, the term "playing card shift" means a phenomenon that a position of a constituent member (the electrodes 10 and 20 or the separators 30) at a specific portion of the power generation element 40 is shifted laterally beyond an allowable dimension from a position of the constituent member at another portion. In the case where the first bonding portions 61 are not provided, the position of the constituent member at the substantially central portion of the power generation element 40 in the stacking direction is easily shifted laterally from the position of the constituent member at another portion.

A constituent material of the first bonding portions 61 is not limited as long as they can bond the electrodes 10 and 20 and the separator 30. The first bonding portions 61 are formed, for example, on both surfaces of a separator base 31 (corresponding to a "base of a separator") and are formed of a bonding layer 32 containing a bonding material. The bonding layer 32 is provided over the entire surface or a part of the surface of the separator base 31. As the separator base 31, it may be possible to use, for example, a porous sheet, a nonwoven fabric, or the like made of a polymer or fiber that absorbs and holds the electrolyte contained in the electrolytic solution. The bonding material constituting the bonding layer 32 is not limited as long as it can bond the positive electrode active material layer 12 and the separator base 31 and can bond the negative electrode active material layer 22 and the separator base 31. As the bonding material, it may be possible to use, for example, an olefin-based resin such as polyethylene (PE), polypropylene (PP), or the like, an (meth) acryl-based resin such as polymethyl acrylate (PMA), polymethyl methacrylate (PMMA), or the like, and a fluorine resin such as polyvinylidene fluoride (PVdF), polyvinyl fluoride (PVF), or the like. The bonding material of the bonding layer 32 that bonds the positive electrode 10 and the separator base 31 may be the same as or different from the bonding material of the bonding layer 32 that bonds the negative electrode 20 and the separator base 31.

The first bonding portions 61 are disposed at all locations between the positive electrode 10 and the separator 30 and between the negative electrode 20 and the separator 30. However, it is not necessary to dispose the first bonding portions 61 at all locations between the electrodes 10 and 20 and the separators 30 as long as the playing card shift can be prevented, and the first bonding portions 61 may be disposed at intervals. The first bonding portions 61 may be disposed at equal intervals in the stacking direction. In addition, the first bonding portions 61 may be disposed "densely" at a substantially central portion of the power generation element 40 in the stacking direction, and may be disposed "sparsely" at a portion near the outermost layer 40a of the power generation element 40. In the case where the first bonding portions 61 are disposed at intervals, it is possible to use the separator 30 in which the first bonding portion 61 is formed only on one surface of the separator base 31. In a portion where the positive electrode 10 and the negative electrode 20 arranged on both sides of the separator 30 are not bonded together, it is possible to use the separator 30 formed only of the separator base 31 in which the first bonding portions 61 are not formed on both surfaces of the separator base 31.

Referring to FIG. 4, the second bonding portions 62 bond the outermost layers 40a of the power generation element 40 and the inner side 50a of the exterior member 50. This can prevent a position of the power generation element 40 with respect to the exterior member 50 from being shifted laterally beyond an allowable dimension when the unit cell 100 receives an impact. When the second bonding portions 62 are not provided, the position of the power generation element 40 is easily shifted laterally with respect to the inner side 50a of the exterior member 50.

A constituent material of the second bonding portions 62 is not limited as long as it can bond the outermost layers 40a of the power generation element 40 and the inner side 50a of the exterior member 50. The second bonding portions 62 includes, for example, bonding agents, adhesives, or double-sided tapes. The bonding material constituting the bonding agents, the bonding material constituting the adhesives, or the bonding material constituting bonding layers in the double-sided tapes may be the above-mentioned bonding material constituting the bonding layers 32 in the first bonding portions 61.

The outermost layer 40a of the power generation element 40 shown in FIG. 4 is the negative electrode current collector 21. The outermost layer 40a of the power generation element 40 is not limited to this case. In addition to the illustrated negative electrode current collector 21, the negative electrode active material layer 22, the positive electrode current collector 11, the positive electrode active material layer 12, or the separator 30 may be positioned in the outermost layer 40a of the power generation element 40. Therefore, the second bonding portions 62 bond the illustrated negative electrode current collector 21 and the inner side 50a of the exterior member 50, and may also bond the negative electrode active material layer 22, the positive electrode current collector 11, the positive electrode active material layer 12, or the separator 30 and the inner side 50a of the exterior member 50.

Referring to FIGS. 4 and 6, the second bonding portions 62 bond the outermost layers 40a of the power generation element 40 and the inner side 50a of the exterior member 50 at a position opposite to a side where the positive electrode tab 13 and the negative electrode tab 23 are connected. A bonding force per unit area and a size of the second bonding portions 62 (an area in contact with the power generation element 40 and the exterior member 50) are determined from the viewpoint of sufficiently securing a bonding force that prevents the position of the power generation element 40 with respect to the exterior member 50 from being shifted laterally beyond an allowable dimension when the unit cell 100 receives an impact.

In addition, a rectangular shape shown by a two-dot chain line in FIG. 6 indicates a position where third bonding portions 133 and fourth bonding portions 134 to be used when forming the battery module 200 are located.

Next, a shape and size of the separator 30 will be described with reference to FIGS. 5 and 6. When the power generation element 40 is viewed in a plan view from the stacking direction, the outer peripheral edge 30a of the separator 30 has a shape similar to the shape of the outer peripheral edges 10a and 20a of the electrodes 10 and 20. Furthermore, the separator 30 has such a size that the outer peripheral edge 30a of the separator 30 is positioned inside the joint portion 52 without being sandwiched by the joint portion 52 of the exterior member 50. Due to such shape and size of the separator 30, the separator 30 does not have a portion that partially protrudes laterally beyond the outer peripheral edges 10a and 20a of the electrodes 10 and 20 (the outer peripheral edge 20a of the larger negative electrode 20 in the illustrated example).

The shape of the outer peripheral edges 10a and 20a of the electrodes 10 and 20 is rectangular, and the shape of the outer peripheral edge 30a of the separator 30 is also rectangular. In the unit cell 100 of the present embodiment, the separator 30 does not function as a member for joining the power generation element 40 to the exterior member 50. For this reason, when determining the size of the separator 30, it is not necessary to consider the point of joining the separator 30 to the exterior member 50, but it is only necessary to consider ensuring the function of the power generation element 40. Therefore, there is no need to provide a region for joining the separator 30 and the exterior member 50 inside the exterior member 50, and the size of the separator 30 and the exterior member 50 can be made as small as possible. As a result, a ratio of a volume of the power generation element 40 to a volume of the exterior member 50 increases.

Referring to FIG. 5, the separator 30 has such a size that the outer peripheral edge 30a of the separator 30 does not protrude laterally beyond the outer peripheral edge 20a of the negative electrode 20. This makes it unnecessary to provide a space in the exterior member 50 to make sure that the outer peripheral edge 30a of the separator 30 is not sandwiched by the joint portion 52 of the exterior member 50. Thus, the size of the exterior member 50 can be made as small as possible. As a result, the ratio of the volume of the power generation element 40 to the volume of the exterior member 50 can be further increased.

The size of the separator 30 is not limited to the size shown in FIG. 5. When the power generation element 40 is viewed in a plan view from the stacking direction, the outer peripheral edge 30a of the separator 30 may have a shape similar to the shape of the outer peripheral edges 10a and 20a of the electrodes 10 and 20, and the separator 30 may have such a size that the outer peripheral edge 30a is located inside the joint portion 52 without being sandwiched by the joint portion 52. That is, the separator 30 may not have a portion that partially protrudes laterally beyond the outer peripheral edges 10a and 20a of the electrodes 10 and 20. Therefore, as long as the function of the power generation element 40 can be secured, the outer peripheral edge 30a of the separator 30 may be smaller than the outer peripheral edge 20a of the negative electrode 20. Furthermore, the outer peripheral edge 30a of the separator 30 may have a shape similar to the shape of the outer peripheral edges 10a and 20a of the electrodes 10 and 20, and the outer peripheral edge 30a of the separator 30 may be larger than the outer peripheral edge 20a of the negative electrode 20.

### (Battery Module 200)

Next, a configuration of the battery module 200 will be described with reference to FIGS. 1 and 2 again. In summary, the battery module 200 includes a plurality of unit cells 100, the holding member 110 that sandwiches and holds the unit cells 100 from both sides in the stacking direction, and a pressing part 120 provided in the holding member 110 and configured to press the unit cells 100 with a pressing force acting along the stacking direction. The battery module 200 further includes the third bonding portions 133 that bond the unit cells 100 to the holding member 110 and the fourth bonding portions 134 that bond the unit cells 100 to each other. When the unit cells 100 are viewed in a plan view from the stacking direction, the second bonding portions 62 bond the outermost layers 40a of the power generation element 40 and the inner side 50a of the exterior member 50 in a region that does not overlap with the region where the pressing part 120 and the third bonding portions 133 are present (*see* also FIGS. 4 and 5). Furthermore, when the unit cells 100 are viewed in a plan view from the stacking direction, the second bonding portions 62 bond the outermost layers 40a of the power generation element 40 and the inner side 50a of the exterior member 50 in a region that does not overlap with the region where the fourth bonding portions 134 are present (see also FIG. 6). Details will be described below.

The unit cells 100 have a flat shape. The direction in which the unit cells 100 are stacked coincides with the stacking direction in which the electrodes 10 and 20 and the separators 30 are stacked. In FIG. 2, portions indicated by reference numeral 53 exaggerate bulges that appear on the surfaces of the exterior members 50 by providing the second bonding portions 62. A dimension of the bulges 53 of the exterior members 50 is about 30 µm on one side.

The holding member 110 includes an upper holding member 111 and a lower holding member 112. The upper holding member 111 and the lower holding member 112 have a plate shape and are made of a metallic material such as aluminum or the like. The upper holding member 111 and the lower holding member 112 have through holes 113 through which through bolts (not shown) are inserted. Four through holes 113 are formed. The stacked unit cells 100 are sandwiched between the upper holding member 111 and the lower holding member 112 from both sides in the stacking direction. The upper holding member 111 and the lower holding member 112 are fastened by the through bolts. In order to receive axial forces of the through bolts, hollow sleeves 114 into which the through bolts are inserted are disposed between the upper holding member 111 and the lower holding member 112 (*see* FIG. 1).

The pressing part 120 is formed of a bulging portion 121 formed at a central portion of the upper holding member 111. The bulging portion 121 bulges toward the stacked unit cells 100. The bulging portion 121 has a concave camber shape. The bulging portion 121 has a pressing surface 122 to which the third bonding portion 133 is attached, and an inclined surface 123 which obliquely extends from the pressing surface 122. The pressing surface 122 of the bulging portion 121 is bonded to an end surface of the uppermost unit cell 100 among the stacked unit cells 100 via the third bonding portion 133. The lowermost unit cell 100 is bonded to the lower holding member 112 through the third bonding portion 133. Then, by fastening the upper holding member 111 and the lower holding member 112, a pressing force acting in the stacking direction is applied to each unit cell 100.

Referring to FIG. 2, the third bonding portions 133 bond the uppermost unit cell 100 and the lowermost unit cell 100 to the holding member 110. Thus, regarding the uppermost unit cell 100 and the lowermost unit cell 100, when the battery module 200 receives an impact, the positions of the unit cells 100 with respect to the holding member 110 can be prevented from being shifted laterally beyond an allowable dimension. The third bonding portions 133 are arranged in the central portions of the uppermost unit cell 100 and the lowermost unit cell 100 (*see* also the two-dot chain line in FIG. 6).

A constituent material of the third bonding portions 133 is not limited as long as it can bond the unit cells 100 and the holding member 110. The third bonding portions 133 include, for example, bonding agents, adhesives, or double-sided tapes. The bonding material constituting the bonding agents, the bonding material constituting the adhesives, or the bonding material constituting bonding layers in the double-sided tapes may be the above-mentioned bonding material constituting the bonding layers 32 in the first bonding portions 61.

When the unit cells 100 are viewed in a plan view from the stacking direction, the second bonding portions 62 bond the outermost layers 40a of the power generation element 40 and the inner side 50a of the exterior member 50 in a region that does not overlap with the region where the pressing part 120 and the third bonding portion 133 are present (*see* also FIG. 6). In the case where the second bonding portions 62 exists in a region that overlaps with the region where the pressing part 120 and the third bonding portion 133 are present, a distance between the pressing surface 122 of the pressing part 120 and the end surface of the uppermost unit cell 100 locally becomes small. The pressing force applied to the unit cells 100 is locally increased due to the presence of the second bonding portions 62. When the pressing force is locally increased, the distance between the electrodes 10 and 20 varies, thereby causing localization of a reaction and resulting in a decrease in battery performance and a decrease in cycle lifespan. Therefore, in order to make the pressing force applied to the unit cells 100 uniform, the second bonding portions 62 are caused to exist in a region that does not overlap with the region where the pressing part 120 and the third bonding portion 133 are present.

When the pressing part 120 is configured by the camber-shaped bulging portion 121, as shown in FIG. 2, the second bonding portions 62 may exist in a region that overlaps with a region where the inclined surface 123 is present. This is because the inclined surface 123 does not make contact with the unit cell 100 and there is no possibility that the pressing force applied to the unit cell 100 is locally increased.

A thickness of the second bonding portions 62 in the stacking direction is preferably smaller than a thickness of the third bonding portions 133 in the stacking direction. This is because the holding member 110 (the upper holding member 111 and the lower holding member 112) does not make contact with the bulge 53 of the exterior member 50 and there is no possibility that the pressing force applied to the unit cells 100 is locally increased.

The fourth bonding portions 134 bond the unit cells 100 to each other. Thus, when the battery module 200 receives an impact, as for the unit cells 100 other than the uppermost unit cell and the lowermost unit cell, the positions of the unit cells 100 with respect to the holding member 110 can be prevented from being shifted laterally beyond an allowable dimension. The fourth bonding portions 134 have substantially the same size as the third bonding portions 133, and are arranged in the central portions of the unit cells 100 just like the third bonding portions 133 (see also the two-dot chain line in FIG. 6).

A constituent material of the fourth bonding portions 134 is not limited as long as it can bond the unit cells 100 to each other. The fourth bonding portions 134 include, for example, bonding agents, adhesives, or double-sided tapes. The bonding material constituting the bonding agents, the bonding material constituting the adhesives, or the bonding material constituting bonding layers in the double-sided tapes may be the above-mentioned bonding material constituting the bonding layers 32 in the first bonding portions 61.

When the unit cells 100 are viewed in a plan view from the stacking direction, the second bonding portions 62 bond the outermost layers 40a of the power generation element 40 and the inner side 50a of the exterior member 50 in a region that does not overlap with the region where the fourth bonding portions 134 are present (*see* also FIG. 6). In the case where the second bonding portions 62 exists in a region that overlaps with the region where the fourth bonding portions 134 are present, the distance between the unit cells 100 locally becomes small. The pressing force applied to the unit cells 100 is locally increased due to the presence of the second bonding portions 62. When the pressing force is locally increased, the distance between the electrodes 10 and 20 varies, thereby causing localization of a reaction and resulting in a decrease in battery performance and a decrease in cycle lifespan. Therefore, in order to make the pressing force applied to the unit cells 100 uniform, the second bonding portions 62 are caused to exist in a region that does not overlap with the region where the fourth bonding portions 134 are present.

The thickness of the second bonding portions 62 in the stacking direction is preferably smaller than a half a thickness of the fourth bonding portions 134 in the stacking direction.

This is because the adjacent unit cells 100 do not make contact with each other at the portion of the bulge 53 of the exterior member 50 and there is no possibility that the pressing force applied to the unit cells 100 by the pressing part 120 becomes non-uniform. When the adjacent unit cells 100 make contact with each other at the portion of the bulge 53 of the exterior member 50, there is a possibility that a force for separating the adjacent unit cells 100 acts and the pressing force applied to the unit cells 100 becomes uneven.

Next, operations of the present embodiment will be described.

In the unit cell 100 of the present embodiment, the electrodes 10 and 20 (the positive electrode 10 and the negative electrode 20) and the separator 30 are bonded by the first bonding portions 61. Thus, when the unit cell 100 receives an impact, it is possible to prevent a positional shift called a playing card shift. In the unit cell 100, the outermost layers 40a of the power generation element 40 and the inner side 50a of the exterior member 50 are bonded by the second bonding portions 62. This can prevent the position of the power generation element 40 with respect to the exterior member 50 from being shifted laterally beyond an allowable dimension when the unit cell 100 receives an impact. Furthermore, when the power generation element 40 is viewed in a plan view from the stacking direction, the outer peripheral edge 30a of the separator 30 has a shape similar to the shape of the outer peripheral edges 10a and 20a of the electrodes 10 and 20, and the separator 30 has such a size that the outer peripheral edge 30a is located inside the joint portion 52 without being sandwiched by the joint portion 52. That is, the separator 30 does not have a portion that partially protrudes laterally beyond the outer peripheral edges 10a and 20a of the electrodes 10 and 20. There is no need to provide a space for joining the outer peripheral edge 30a of the separator 30 and the exterior member 50 inside the exterior member 50. Therefore, the ratio of the volume of the power generation element 40 to the volume of the exterior member 50 is increased, and the volume energy density representing the output energy per unit volume of the unit cell 100 is improved.

Since the separator 30 has such a size that the outer peripheral edge 30a of the separator 30 does not protrude laterally beyond the outer peripheral edges 10a and 20a of the electrodes 10 and 20, it is possible to further increase the ratio of the volume of the power generation element 40 to the volume of the exterior member 50. Thus, the volume energy density is further increased.

In the battery module 200 of the present embodiment, the uppermost unit cell 100 and the lowermost unit cell 100 are bonded to the holding member 110 by the third bonding portions 133. Thus, as for the uppermost unit cell 100 and the lowermost unit cell 100, when the battery module 200 receives an impact, the positions of the unit cells 100 with respect to the holding member 110 can be prevented from being shifted laterally beyond an allowable dimension. In the battery module 200, the unit cells 100 are bonded to each other by the fourth bonding portions 134. Thus, when the battery module 200 receives an impact, as for the unit cells 100 other than the uppermost unit cell and the lowermost unit cell, the positions of the unit cells 100 with respect to the holding member 110 can be prevented from being shifted laterally beyond the allowable dimension. Furthermore, when the stacked battery 100 is viewed in a plan view from the stacking direction, the second bonding portions 62 bond the outermost layers 40a of the power generation element 40 and the inner side 50a of the exterior member 50 in a region that does not overlap with the region where the pressing part 120 and the third bonding portions 133 are present. Moreover, when the unit cells 100 are viewed in a plan view from the stacking direction, the second bonding portions 62 bond the outermost layers 40a of the power generation element 40 and the inner side 50a of the exterior member 50 in a region that does not overlap with the region where the fourth bonding portions 134 are present. By adopting such an arrangement, the pressing force applied to the unit cells 100 by the pressing part 120 becomes uniform. As a result, localization of a reaction is prevented. It is possible to prevent a decrease in battery performance and a decrease in cycle lifespan.

The thickness of the second bonding portions 62 in the stacking direction is smaller than the thickness of the third bonding portions 133 in the stacking direction. The holding member 110 (the upper holding member 111 and the lower holding member 112) does not make contact with the bulge 53 of the exterior member 50. There is no possibility that the pressing force applied to the unit cells 100 is locally increased. Furthermore, the thickness of the second bonding portions 62 in the stacking direction is smaller than a half the thickness of the fourth bonding portions 134 in the stacking direction. The adjacent unit cells 100 do not make contact with each other at the portion of the bulge 53 of the exterior member 50. There is no possibility that the pressing force applied to the unit cells 100 by the pressing part 120 becomes non-uniform.

As described above, the unit cell 100 of the present embodiment includes the power generation element 40, the exterior member 50, the first bonding portions 61 that bond the electrodes 10 and 20 and the separator 30, and the second bonding portions 62 that bond the outermost layers 40a of the power generation element 40 and the inner side 50a of the exterior member 50. The exterior member 50 has the joint portion 52. When the power generation element 40 is viewed in a plan view from the stacking direction, the outer peripheral edge 30a of the separator 30 has a shape similar to the shape of the outer peripheral edges 10a and 20a of the electrodes 10 and 20, and the separator 30 has such a size that the outer peripheral edge 30a of the separator 30 is located inside the joint portion 52 without being sandwiched by the joint portion 52.

With such a configuration, when the unit cell 100 receives an impact, the first bonding portions 61 and the second bonding portions 62 can prevent a positional shift called a playing card shift or can prevent the position of the power generation element 40 with respect to the exterior member 50 from being shifted laterally beyond an allowable dimension. Furthermore, there is no need to provide a space for joining the outer peripheral edge 30a of the separator 30 and the exterior member 50 inside the exterior member 50. Thus, the volume energy density is improved. As a result, it is possible to provide the unit cell 100 capable of improving the volume energy density while maintaining the impact resistance.

The separator 30 has such a size that the outer peripheral edge 30a of the separator 30 does not protrude laterally beyond the outer peripheral edges 10a and 20a of the electrodes 10 and 20.

With such a configuration, the volume energy density is further improved.

The second bonding portions 62 include, for example, bonding agents, adhesives, or double-sided tapes.

With such a configuration, the outermost layers 40a of the power generation element 40 and the inner side 50a of the exterior member 50 can be bonded using an appropriate material.

The first bonding portions 61 are formed on at least one surface of the separator base 31 and are formed of the bonding layer 32 containing a bonding material.

With such a configuration, the electrodes 10 and 20 and the separators 30 can be bonded using the bonding separators 30, and the stacking operation in a manufacturing process of the power generation element 40 can be easily performed.

The battery module 200 of the present embodiment is a battery module 200 including at least one unit cell 100, and includes the holding member 110, the pressing part 120, and the third bonding portions 133 that bond the unit cell 100 to the holding member 110. When the stacked battery 100 is viewed in a plan view from the stacking direction, the second bonding portions 62 bond the outermost layers 40a of the power generation element 40 and the inner side 50a of the exterior member 50 in a region that does not overlap with the region where the pressing part 120 and the third bonding portions 133 are present.

With such a configuration, it is possible to provide a battery module 200 including the unit cells 100 in which the volume energy density is improved while maintaining the impact resistance. When the battery module 200 receives an impact, the third bonding portions 133 can prevent the unit cells 100 bonded to the holding member 110 from being shifted laterally with respect to the holding member 110 beyond an allowable dimension. Since the second bonding portions 62 exist in the region that does not overlap with the region where the pressing part 120 and the third bonding portions 133 are present, the pressing force applied to the unit cell 100 can be made uniform.

The third bonding portions 133 include, for example, bonding agents, adhesives, or double-sided tapes.

With such a configuration, the unit cell 100 and the holding member 110 can be bonded using an appropriate material.

The thickness of the second bonding portions 62 in the stacking direction is smaller than the thickness of the third bonding portions 133 in the stacking direction.

With such a configuration, the holding member 110 does not make contact with the bulge 53 of the exterior member 50. This makes it possible to prevent the pressing force applied to the unit cells 100 from being locally increased.

The battery module 200 further includes the fourth bonding portions 134 that bond the unit cells 100 sandwiched by the holding member 110 to each other. When the stacked battery 100 is viewed in a plan view from the stacking direction, the second bonding portions 62 bond the outermost layers 40a of the power generation element 40 and the inner side 50a of the exterior member 50 in a region that does not overlap with the region where the fourth bonding portions 134 are present.

With such a configuration, when the battery module 200 receives an impact, the fourth bonding portions 134 can prevent the unit cells 100 other than the unit cells 100 bonded to the holding member 110 from being shifted laterally with respect to the holding member 110 beyond an allowable dimension. Furthermore, the second bonding portions 62 exist in the region which does not overlap with the region where the fourth bonding portions 134 are present. Therefore, the pressing force applied to the unit cells 100 can be made uniform.

The fourth bonding portions 134 include, for example, bonding agents, adhesives, or double-sided tapes.

With such a configuration, the unit cells 100 can be bonded to each other using an appropriate material.

The thickness of the second bonding portions 62 in the stacking direction is smaller than a half the thickness of the fourth bonding portions 134 in the stacking direction.

With such a configuration, the adjacent unit cells 100 do not make contact with each other at the portion of the bulge 53 of the exterior member 50. This makes it possible to prevent the pressing force applied to the unit cells 100 by the pressing part 120 from being non-uniform.

### (Modification of Arrangement Position of Second Bonding Portion 62)

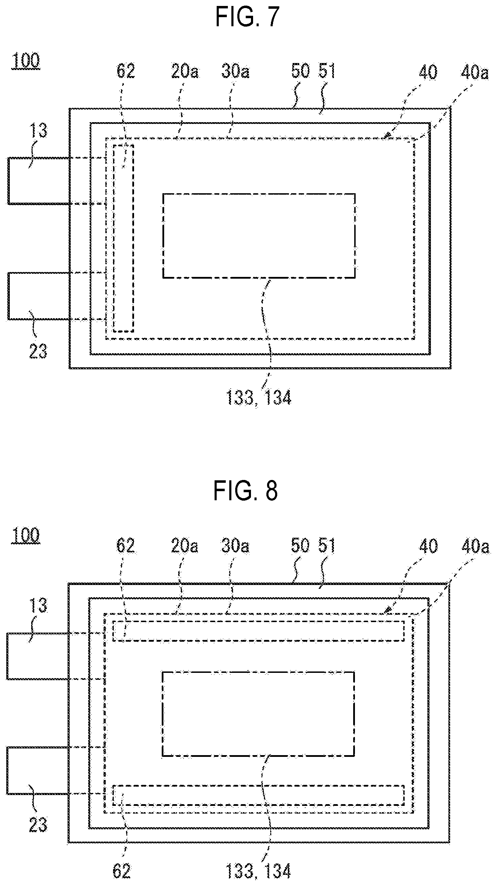

FIGS. 7, 8 and 9 are plan views showing Modifications 1, 2, and 3 of the arrangement position of the second bonding portions 62, respectively.

The arrangement position of the second bonding portions 62 is appropriately determined from the viewpoint of preventing the positional shift of the power generation element 40 with respect to the exterior member 50 and from the viewpoint of not overlapping with the region where the third bonding portions 133 and the fourth bonding portions 134 are present.

In Modification 1 shown in FIG. 7, the second bonding portions 62 bond the outermost layers 40a of the power generation element 40 and the inner side 50a of the exterior member 50 at positions on the same side as the side to which the positive electrode tab 13 and the negative electrode tab 23 are connected.

In Modification 2 shown in FIG. 8, the second bonding portions 62 bond the outermost layers 40a of the power generation element 40 and the inner side 50a of the exterior member 50 at positions extending in parallel with a direction in which the positive electrode tab 13 and the negative electrode tab 23 extend.

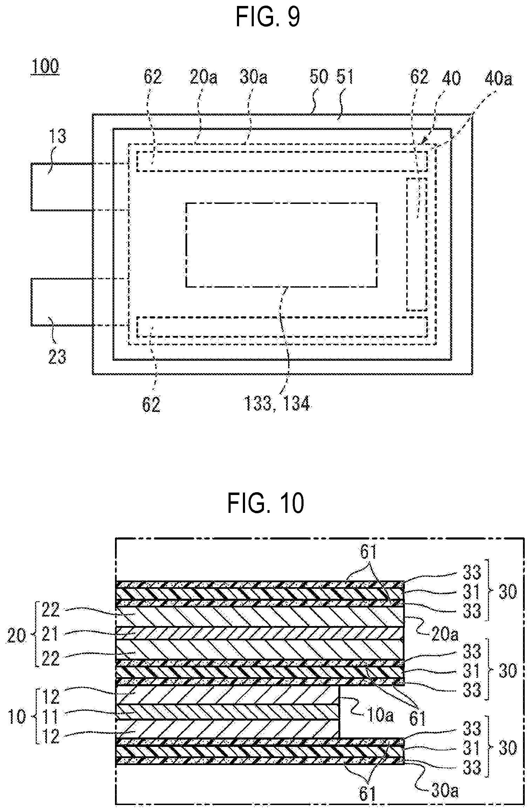

Modification 3 shown in FIG. 9 is directed to a combination of the position of the embodiment and the position of Modification 2. The second bonding portions 62 bond the outermost layers 40a of the power generation element 40 and the inner side 50a of the exterior member 50 at positions on the side opposite to the side to which the positive electrode tab 13 and the negative electrode tab 23 are connected and at positions extending in parallel with the direction in which the positive electrode tab 13 and the negative electrode tab 23 extend.

### (Modification of First Bonding Portion 61)

FIG. 10 is an enlarged sectional view showing a main part of the power generation element 40. FIG. 10 corresponds to FIG. 5.

The constituent material of the first bonding portions 61 is not limited as long as it can bond the electrodes 10 and 20 and the separators 30. A modification of the first bonding portions 61 may be configured by, for example, a bonding layer 33, which is formed on at least one surface of the separator base 31 and includes a bonding material and a heat-resistant material. The bonding layer 33 is provided over the entire surface or a part of the surface of the separator base 31. The same material as the separator 30 of the embodiment may be used as the separator base 31 and the bonding material. Alumina powder, a binder for binding the alumina powder, or the like is used as the heat-resistant material.

As described above, the first bonding portions 61 are configured by the bonding layer 33, which is formed on at least one surface of the separator base 31 and includes a bonding material and a heat-resistant material.

With such a configuration, the electrodes 10 and 20 and the separators 30 can be bonded using the separators 30 having adhesiveness and heat resistance, and the stacking operation in the manufacturing process of the power generation element 40 having improved heat resistance can be easily performed.

### (Other Modifications)

Although the battery module 200 in which the unit cells 100 are sandwiched by the holding member 110 has been described, the present disclosure is not limited to this case. The present disclosure may also be applied to a battery module 200 in which one unit cell 100 is sandwiched by the holding member 110. In this case, it is needless to say that the third bonding portions 133 for bonding the unit cells 100 to the holding member 110 exist, but the fourth bonding portions 134 for bonding the unit cells 100 to each other do not exist.

When the pressing part 120 is configured by the camber-shaped bulging portion 121, the bulging portion 121 may be provided only in at least one of the upper holding member 111 and the lower holding member 112. Although there is shown the case where the bulging portion 121 is provided on the upper holding member 111, the bulging portion 121 may be provided only on the lower holding member 112. Bulging portions 121 may be provided on both the upper holding member 111 and the lower holding member 112.

The pressing part 120 is not limited to the case where the holding member 110 includes the camber-shaped bulging portion 121. For example, a sheet member provided with a leaf spring portion or a sheet member formed of an elastic material may be interposed between the holding member 110 and the unit cells 100 or between the unit cells 100, thereby forming the pressing part 120.

This application is based on Japanese Patent Application No. 2017-177128 filed on September 14, 2017, the entire disclosure of which is incorporated herein by reference.

### EXPLANATION OF REFERENCE NUMERALS

10: positive electrode (electrode), 10a: outer peripheral edge, 11: positive electrode current collector, 12: positive electrode active material layer, 13: positive electrode tab, 20: negative electrode (electrode), 20a: outer peripheral edge, 21: negative electrode current collector, 22: negative electrode active material layer, 23: negative electrode tab, 30: separator, 30a: outer peripheral edge, 31: separator base (base of separator), 32: bonding layer, 33: bonding layer, 40: power generation element, 40a: outermost layer, 41: unit cell layer, 50: exterior member, 50a: inner side of exterior member, 51: peripheral edge portion, 52: joint portion, 53; bulge, 61: first bonding portion, 62: second bonding portion, 100: stacked battery (unit cell), 110: holding member, 111: upper holding member, 112: lower holding member, 120: pressing part, 121: bulging portion, 122: pressing surface, 123: inclined surface, 133: third bonding portion, 134: fourth bonding portion, 200: battery module

## Claims

1. A stacked battery comprising:
a power generation element in which a plurality of electrodes and a plurality of separators are alternately stacked;
an exterior member configured to accommodate the power generation element;
first bonding portions configured to bond the electrodes and the separators; and
second bonding portions configured to bond outermost layers of the power generation element and an inner side of the exterior member,
wherein the exterior member includes a joint portion where peripheral edge portions of the exterior member are overlapped and joined, and
wherein when the power generation element is viewed in a plan view from a stacking direction in which the electrodes and the separators are stacked, an outer peripheral edge of each of the separators has a shape similar to a shape of an outer peripheral edge of each of the electrodes, and the separators have such a size that the outer peripheral edge of each of the separators is located inside the joint portion without being sandwiched by the joint portion.

2. The stacked battery of Claim 1, wherein each of the separators has such a size that the outer peripheral edge of each of the separators does not protrude laterally beyond the outer peripheral edge of each of the electrodes.

3. The stacked battery of Claim 1 or 2, wherein the second bonding portions include a bonding agent, an adhesive, or a double-sided tape.

4. The stacked battery of any one of Claims 1 to 3, wherein each of the first bonding portions is formed on at least one surface of a base of the separators, and includes a bonding layer containing a bonding material.

5. The stacked battery of any one of Claims 1 to 3, wherein each of the first bonding portions is formed on at least one surface of a base of each of the separators, and includes a bonding layer containing a bonding material and a heat-resistant material.

6. A battery module including the stacked battery of any one of Claims 1 to 5, comprising:
a holding member configured to sandwich and hold the stacked battery from both sides in the stacking direction;
a pressing part configured to apply a pressing force to the stacked battery in the stacking direction; and
third bonding portions configured to bond the stacked battery to the holding member,
wherein when the stacked battery is viewed in a plan view from the stacking direction, the second bonding portions bond the outermost layers of the power generation element and the inner side of the exterior member in a region that does not overlap with a region where the pressing part and the third bonding portions are present.

7. The battery module of Claim 6, wherein the third bonding portions include a bonding agent, an adhesive, or a double-sided tape.

8. The battery module of Claim 6 or 7, wherein a thickness of the second bonding portions in the stacking direction is smaller than a thickness of the third bonding portions in the stacking direction.

9. The battery module of Claim 6, wherein the battery module comprises a plurality of stacked batteries that is sandwiched by the holding member,
wherein the battery module further includes fourth bonding portions configured to bond the stacked batteries to each other, and
wherein when the stacked batteries are viewed in a plan view from the stacking direction, the second bonding portions bond the outermost layers of the power generation element and the inner side of the exterior member in a region that does not overlap with a region where the fourth bonding portions are present.

10. The battery module of Claim 9, wherein the fourth bonding portions include a bonding agent, an adhesive, or a double-sided tape.

11. The battery module of Claim 9 or 10, wherein a thickness of the second bonding portions in the stacking direction is smaller than a half a thickness of the fourth bonding portions in the stacking direction.

## Amended claims

### Amended claims under Art. 19.1 PCT

1. (Cancelled)

2. (Cancelled)

3. (Cancelled)

4. (Cancelled)

5. (Cancelled)

6. (Amended) A battery module comprising:
a stacked battery comprising a power generation element in which a plurality of electrodes and a plurality of separators are alternately stacked, an exterior member configured to accommodate the power generation element, first bonding portions configured to bond the electrodes and the separators, and second bonding portions configured to bond outermost layers of the power generation element and an inner side of the exterior member, wherein the exterior member includes a joint portion where peripheral edge portions of the exterior member are overlapped and joined, and wherein when the power generation element is viewed in a plan view from a stacking direction in which the electrodes and the separators are stacked, an outer peripheral edge of each of the separators has a shape similar to a shape of an outer peripheral edge of each of the electrodes, and the separators have such a size that the outer peripheral edge of each of the separators is located inside the joint portion without being sandwiched by the joint portion;
a holding member configured to sandwich and hold the stacked battery from both sides in the stacking direction;
a pressing part configured to apply a pressing force to the stacked battery in the stacking direction; and
third bonding portions configured to bond the stacked battery to the holding member,
wherein when the stacked battery is viewed in a plan view from the stacking direction, the second bonding portions bond the outermost layers of the power generation element and the inner side of the exterior member in a region that does not overlap with a region where the pressing part and the third bonding portions are present.

7. The battery module of Claim 6, wherein the third bonding portions include a bonding agent, an adhesive, or a double-sided tape.

8. The battery module of Claim 6 or 7, wherein a thickness of the second bonding portions in the stacking direction is smaller than a thickness of the third bonding portions in the stacking direction.

9. The battery module of Claim 6, wherein the battery module comprises a plurality of stacked batteries that is sandwiched by the holding member,
wherein the battery module further includes fourth bonding portions configured to bond the stacked batteries to each other, and
wherein when the stacked batteries are viewed in a plan view from the stacking direction, the second bonding portions bond the outermost layers of the power generation element and the inner side of the exterior member in a region that does not overlap with a region where the fourth bonding portions are present.

10. The battery module of Claim 9, wherein the fourth bonding portions include a bonding agent, an adhesive, or a double-sided tape.

11. The battery module of Claim 9 or 10, wherein a thickness of the second bonding portions in the stacking direction is smaller than a half a thickness of the fourth bonding portions in the stacking direction.

12. (Added) The battery module of any one of Claims 6 to 11, wherein each of the separators has such a size that the outer peripheral edge of each of the separators does not protrude laterally beyond the outer peripheral edge of each of the electrodes.

13. (Added) The battery module of any one of Claims 6 to 12, wherein the second bonding portions include a bonding agent, an adhesive, or a double-sided tape.

14. (Added) The battery module of any one of Claims 6 to 13, wherein each of the first bonding portions is formed on at least one surface of a base of each of the separators, and includes a bonding layer containing a bonding material.

15. (Added) The battery module of any one of Claims 6 to 13, wherein each of the first bonding portions is formed on at least one surface of a base of each of the separators, and includes a bonding layer containing a bonding material and a heat-resistant material.
The written opinion of International Searching Authority includes a statement that the subject matters relating to originally filed Claims 6-11 involve inventive step.
Originally filed Claims 1-5 have been canceled, and Claim 6 has been amended to clearly incorporate the limitations of Claim 1 from which originally filed Claim 6 had depended. Newly added Claims 12-15 recite the limitations of Claims 2-5 from which originally filed Claim 6 had depended.
